(19) Europäisches Patentamt
European Patent Office
Office européen des brevets

(11) **EP 3 249 008 B1**

(12) **EUROPEAN PATENT SPECIFICATION**

(45) Date of publication and mention
of the grant of the patent:
**19.12.2018 Bulletin 2018/51**

(51) Int Cl.:
*C08L 21/00* (2006.01)       *B60C 1/00* (2006.01)
*B29B 7/84* (2006.01)        *C08L 15/02* (2006.01)
*B29B 7/18* (2006.01)        *B29B 7/28* (2006.01)
*C08K 3/04* (2006.01)        *B29D 30/06* (2006.01)
*B29B 7/74* (2006.01)        *B29B 7/90* (2006.01)
*B29C 45/26* (2006.01)       *B29D 30/00* (2006.01)

(21) Application number: **17171873.7**

(22) Date of filing: **19.05.2017**

(54) **PNEUMATIC TYRE**

LUFTREIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **23.05.2016 JP 2016102352**

(43) Date of publication of application:
**29.11.2017 Bulletin 2017/48**

(73) Proprietor: **Sumitomo Rubber Industries, Ltd.
Kobe-shi, Hyogo 651-0072 (JP)**

(72) Inventors:
  • **HONDA, Shinichiro
    Kobe-shi, Hyogo 651-0072 (JP)**
  • **MUKOUGUCHI, Daiki
    Kobe-shi, Hyogo 651-0072 (JP)**
  • **YOSHIZUMI, Takuma
    Kobe-shi, Hyogo 651-0072 (JP)**

(74) Representative: **TBK
Bavariaring 4-6
80336 München (DE)**

(56) References cited:
**EP-A1- 0 722 850       EP-A1- 2 377 693
EP-A1- 2 674 305**

• **DATABASE WPI Week 201330 Thomson
Scientific, London, GB; AN 2013-F71343
XP002774150, & WO 2013/054602 A1 (SUMITOMO
RUBBER IND LTD) 18 April 2013 (2013-04-18)**

Remarks:
The file contains technical information submitted after
the application was filed and not included in this
specification

**Description**

[Technical Field]

The present invention relates to a pneumatic tire.

[Technical Background]

Conventionally, in the inner liner or the like of a pneumatic tire, a rubber composition containing a butyl-based rubber, which is hard for air to permeate, is used (for example, Patent Document 1).
Such a rubber composition is generally manufactured by blending a butyl-based rubber, a natural rubber, a carbon black, a filler, and the like, and using an extruder to knead and mold the mixture, and vulcanizing the molded product.

[Related Art]

[Patent Document]

[Patent Document 1] Japanese Patent Laid-Open Publication No. 2014-227494.

[Summary of the Invention]

[Problems to Be Solved by the Invention]

In recent years, it has been demanded to further lower gas permeability of a vulcanized rubber composition. In view of such a situation, a main object of the present invention is to provide a pneumatic tire having an excellent low gas permeability (in particular, having a property of being hard for air to permeate).

[Means for Solving the Problems]

The present inventors have conducted extensive studies to solve the above-described problem. As a result, the present inventors have found that a pneumatic tire having an inner liner formed of a vulcanized rubber composition has an excellent low gas permeability when a number of voids each having a volume of 4.19 $\mu$m$^3$ or more per 8,000,000 $\mu$m$^3$ in the vulcanized rubber composition in an environment of 60 °C under an atmospheric pressure is 2 or less, and an air permeation coefficient of the vulcanized rubber composition measured using a differential pressure method in an environment of 60 °C is $0.95 \times 10^{-10}$ cm$^3$·cm/(cm$^2$·s·cmHg) or less. Further, the present inventors have found that such a vulcanized rubber composition having an excellent low gas permeability can be suitably manufactured, for example, using a vulcanized rubber composition manufacturing method. The method includes a kneading process in which an unvulcanized rubber composition is subjected to kneading by extrusion molding, and a vulcanization process in which, after the kneading process, the unvulcanized rubber composition is vulcanized. In the kneading process, the unvulcanized rubber composition is degassed after passing through a slit having a maximum width of 2 mm or less provided in a screw of an extruder. In the vulcanization process, the unvulcanized rubber composition is vulcanized within 24 hours after being extrusion-molded in the kneading process. The present invention is accomplished by conducting further studies based on these findings.
According to one aspect of the present invention, a pneumatic tire includes an inner liner including a vulcanized rubber composition such that a number of voids each having a volume of 4.19 ($\mu$m3 or more per 8,000,000 $\mu$m3 in the vulcanized rubber composition is 2 or less in an environment of 60 °C under an atmospheric pressure, and that the vulcanized rubber composition has an air permeation coefficient of $0.95 \times 10$-10 cm3·cm/(cm2·s·cmHg) or less when measured using a differential pressure method in the environment of 60 °C.
According to another aspect of the present invention, a method for manufacturing a vulcanized rubber composition includes extrusion-molding an unvulcanized rubber composition by an extruder including a screw having a slit such that the unvulcanized rubber passes through the slit having a maximum width of 2 mm or less and degassed during the extrusion-molding of the unvulcanized rubber composition, and vulcanizing the unvulcanized rubber composition within 24 hours after the extrusion-molding of the unvulcanized rubber composition such that a vulcanized rubber composition is obtained. A number of voids each having a volume of 4.19 $\mu$m3 or more per 8,000,000 $\mu$m3 in the vulcanized rubber composition is 2 or less in an environment of 60 °C under an atmospheric pressure, and the vulcanized rubber composition has an air permeation coefficient of $0.95 \times 10$-10 cm3·cm/(cm2·s·cmHg) or less when measured using a differential pressure method in the environment of 60 °C.

That is, the present invention includes the following aspects.

Aspect 1: A pneumatic tire includes an inner liner formed of a vulcanized rubber composition, in which a number of voids each having a volume of 4.19 $\mu$m$^3$ or more per 8,000,000 $\mu$m$^3$ in the vulcanized rubber composition in an environment of 60 °C under an atmospheric pressure is 2 or less, and an air permeation coefficient of the vulcanized rubber composition measured using a differential pressure method in an environment of 60 °C is $0.95 \times 10^{-10}$ cm$^3$·cm/(cm$^2$·s·cmHg) or less.

Aspect 2: In the pneumatic tire described in Aspect 1, the vulcanized rubber composition is degassed by passing through a slit having a maximum width of 2 mm or less provided in a screw of an extruder during extrusion molding of an unvulcanized rubber composition before vulcanization.

Aspect 3: In the pneumatic tire described to any one of Aspects 1 and 2, the vulcanized rubber composition is vulcanized within 24 hours after an unvulcanized rubber composition before vulcanization is extrusion-molded.

Aspect 4: In the pneumatic tire described in Aspect 3, thermal history during the extrusion molding is 100 °C or higher.

Aspect 5: In the pneumatic tire described in any one of Aspects 1 - 4, the vulcanized rubber composition contains a carbon black, and the carbon black is dehydrated before being blended into the unvulcanized rubber composition before vulcanization.

Aspect 6: In the pneumatic tire described in any one of Aspects 1 - 5, a thickness of a thinnest portion of the inner liner is 0.2 mm or more.

Aspect 7: A method for manufacturing the vulcanized rubber composition described in any one of Aspects 1 - 6 includes:

a kneading process in which an unvulcanized rubber composition is subjected to kneading by extrusion molding; and
a vulcanization process in which, after the kneading process, the unvulcanized rubber composition is vulcanized.

In the kneading process, the unvulcanized rubber composition is degassed after passing through the slit having a maximum width of 2 mm or less provided in the screw of the extruder.
In the vulcanization process, the unvulcanized rubber composition is vulcanized within 24 hours after being extrusion-molded in the kneading process.

[Effect of the Invention]

According to the present invention, a pneumatic tire having an excellent low gas permeability can be provided.

[Mode for Carrying Out the Invention]

(Pneumatic Tire)

A pneumatic tire of the present invention includes an inner liner formed of a vulcanized rubber composition. A number of voids each having a volume of 4.19 $\mu$m$^3$ or more per 8,000,000 $\mu$m$^3$ in the vulcanized rubber composition in an environment of 60 °C under an atmospheric pressure is 2 or less. An air permeation coefficient of the vulcanized rubber composition measured using a differential pressure method in an environment of 60 °C is $0.95 \times 10^{-10}$ cm$^3$·cm/(cm$^2$·s·cmHg) or less. In the present invention, the pneumatic tire has an excellent low gas permeability when the number of the voids in the specific volume is 2 or less, and the air permeation coefficient is $0.95 \times 10^{-10}$ cm$^3$·cm/(cm$^2$·s·cmHg) or less. In the following, the pneumatic tire of the present invention is described in detail.
In the present invention, the number of the voids is a value obtained by measuring a number of voids each having a volume of 4.19 $\mu$m$^3$ or more per 8,000,000 $\mu$m$^3$ or more in an image obtained by cutting the vulcanized rubber composition in a thickness direction and observing the resulting cross section of the vulcanized rubber composition using a scanning electron microscopy (in an observation visual field of 1000 times to 3000 times) in an environment of 60 °C under an atmospheric pressure. Further, the volume of each void is a value obtained based on a maximum length of the void in the image of the cross section and assuming that the void is a sphere.
In the present invention, it is confirmed from an electron microscopic photograph or the like that voids each having a volume of 4.19 $\mu m^3$ or more are primarily due to fine foaming around solid fine particles (in particular, zinc oxide particles) contained in the vulcanized rubber composition, In the present invention, it is found that, by setting the number of the voids to 2 or less, the pneumatic tire has an excellent low gas permeability.

Further, in the present invention, the air permeation coefficient (cc·cm/cm$^2$·sec·cmHg) is a value measured using a differential pressure method, according to a method specified in JIS K6275-1, and using a gas permeability measuring device "G2700" manufactured by Yanaco Analytical Systems Inc., in an environment in which a test gas is air and a test temperature is 60 °C.

In the present invention, a composition of the vulcanized rubber composition is not particularly limited as long as the composition can be used for an inner liner of a pneumatic tire. However, it is preferable that the composition contain a butyl-based rubber.

Examples of butyl-based rubbers include a brominated butyl rubber (Br-IIR), a halogenated butyl rubber (X-IIR) such as a chlorinated butyl rubber (Cl-IIR), a butyl rubber (IIR), and the like, and Cl-IIR and IIR are particularly preferable. These butyl-based rubbers may each be independently used, or two or more of these butyl-based rubbers may be used in combination.

A blending amount of a butyl-based rubber in the vulcanized rubber composition is not particularly limited. However, from a point of view of suppressing formation of a large number of large voids (each having a volume of 4.19 $\mu m^3$ or more) while effectively reducing the gas permeability of the vulcanized rubber composition, the blending amount of the butyl-based rubber is preferably 80 parts by mass or more, more preferably about 80 - 100 parts by mass, and even more preferably about 85 - 100 parts by mass.

Further, in the present invention, in addition to the butyl-based rubber, the vulcanized rubber composition may further contain a natural rubber, a carbon black, a filler, a compatibilizing agent, and the like.

The natural rubber is not particularly limited. Specific examples of the natural rubber include those commonly used in the tire industry such as SIR20, RSS#3, TSR20. Further, as the natural rubber, an epoxidized natural rubber or the like may also be used. These natural rubbers may each be independently used, or two or more of these natural rubbers may be used in combination.

A blending amount of a natural rubber in the vulcanized rubber composition is not particularly limited. However, from a point of view of suppressing formation of large voids while effectively reducing the gas permeability of the vulcanized rubber composition, the blending amount of the natural rubber is preferably 20 parts by mass or less, more preferably about 0 - 20 parts by mass, and even more preferably about 0 - 15 parts by mass.

The carbon black is not particularly limited, and a commonly known carbon black blended in a vulcanized rubber composition can be used. Specific examples of carbon blacks include SAF, ISAF, HAF, FF, FEF, GPF and the like that are generally used in the tire industry.

The carbon black contained in the vulcanized rubber composition is preferably dehydrated (dehydrated before being blended into an unvulcanized rubber composition before vulcanization). In the present invention, by dehydrating the carbon black before vulcanization, an increase in water content in the unvulcanized rubber composition can be effectively suppressed. Therefore, when the unvulcanized rubber composition is exposed to a high temperature environment until a vulcanized rubber composition is obtained, formation of large voids due to vaporization of water is effectively suppressed. Therefore, it is possible to effectively suppress formation of large voids while reducing the gas permeability of the vulcanized rubber composition. The dehydration of the carbon black can be performed, for example, by heating the carbon black in an oven at 120 °C or higher for two days or more, or by drying the carbon black in a vacuum oven, or the like. Carbon blacks may each be independently used, or two or more carbon blacks may be used in combination.

A water content of the carbon black is preferably 0.5 mass% or less, and more preferably 0.3 mass% or less. For example, when the carbon black has a particle size larger than an FEF class, the water content of the carbon black is preferably 0.3 mass% or less, and when the carbon black has a particle size smaller than the FEF class, the water content of the carbon black is preferably 0.5 mass% or less. The water content of the carbon black is a value measured according to heating loss of JIS K6218.

A nitrogen adsorption specific surface area (N$_2$SA) of the carbon black is preferably 20 m$^2$/g or more, and more preferably 30 m$^2$/g or more. When the N$_2$SA of the carbon black is less than 20 m$^2$/g, there is a tendency that a sufficient reinforcing property cannot be obtained. Further, the N$_2$SA of the carbon black is preferably 80 m$^2$/g or less, and more preferably 50 m$^2$/g or less. When the N$_2$SA of the carbon black exceeds 80 m$^2$/g, there is a tendency that heat generation increases and low fuel consumption performance decreases. The N$_2$SA of the carbon black in the present invention is a value obtained according to Method A of JIS K6217.

From a point of view that a sufficient reinforcing property can be obtained, dibutyl phthalate oil absorption (DBP) of the carbon black is preferably 70 ml/(100 g) or more, and more preferably 90 ml/(100 g) or more. Further, from a point of view that an excellent fatigue resistance property, such as elongation at break, can be obtained, the DBP of the carbon black is preferably 150 ml/(100 g) or less, and more preferably 130 ml/(100 g) or less. The DBP of the carbon black is a value obtained according to a measurement method of JIS K6217-4.

A blending amount of the carbon black in the vulcanized rubber composition is not particularly limited. However, from a point of view of suppressing formation of large voids while effectively reducing the gas permeability of the vulcanized rubber composition, the blending amount of the carbon black is preferably 40 parts by mass or more, more preferably about 45 - 70 parts by mass, and even more preferably about 48 - 60 parts by mass.

The filler is not particularly limited. Either an organic filler or an inorganic filler may be contained. Specific examples of the filler include zinc oxide, silica, calcium carbonate, mica, aluminum hydroxide, magnesium hydroxide, magnesium oxide, clay, talc, titanium oxide, carbon fiber, cellulose fiber, carbon nanotube (multilayer, single layer), graphene, and the like. Among these fillers, from a point of view that a vulcanization reaction of the unvulcanized rubber composition is effectively promoted, zinc oxide is preferably contained.

It is preferred that at least one of the fillers contained in the vulcanized rubber composition is dehydrated (dehydrated before being blended into an unvulcanized rubber composition before vulcanization). In the present invention, by dehydrating the filler, an increase in the water content in the unvulcanized rubber composition can be effectively suppressed. Therefore, when the unvulcanized rubber composition is exposed to a high temperature environment until a vulcanized rubber composition is obtained, formation of large voids due to vaporization of water is effectively suppressed. Therefore, it is possible to more effectively suppress formation of large voids while reducing the gas permeability of the vulcanized rubber composition. Dehydration of the filler can be performed, for example, using a vacuum drying oven or the like. Fillers may each be independently used, or two or more fillers may be used in combination. A water content in a filler is preferably 0.5 mass% or less, and more preferably 0.3 mass% or less. The water content in the filler can be measured according to heating loss of JIS K 6218, according to a Karl Fischer water content measurement method, or the like.

A blending amount of the filler in the vulcanized rubber composition is not particularly limited. However, from a point of view of promoting vulcanization of the vulcanized rubber composition, the blending amount of the filler is preferably 1 part by mass or more, more preferably about 1.2 - 6 parts by mass, and even more preferably about 1.5 - 5 parts by mass.

The compatibilizing agent is not particularly limited, and those conventionally used in the rubber industry can be used. A compatibilizing agent preferably has a property of reducing a separation energy at an interface between a polymer and a filler or between different polymers and promoting mixing between the polymer and the filler or between the different polymers. Specific examples of compatibilizing agents include non-reactive compatibilizing agents such as a styrene-ethylene-butadiene block copolymer, a styrene-methyl methacrylate block copolymer, an ethylene-styrene graft copolymer, chlorinated polyethylene, a mixture of an aromatic hydrocarbon resin and an aliphatic hydrocarbon resin, and a metal soap of an unsaturated fatty acid, and reactive compatibilizing agents such as maleic anhydride grafted polypropylene, a styrene-maleic anhydride copolymer, an ethylene-glycidyl methacrylate copolymer, an ethylene-glycidyl methacrylate copolymer, and a styrene graft copolymer. The compatibilizing agents may each be independently used, or two or more of the compatibilizing agents may be used in combination.

A blending amount of the compatibilizing agent in the vulcanized rubber composition is not particularly limited. However, from a point of view of suppressing formation of large voids while effectively reducing the gas permeability of the vulcanized rubber composition, the blending amount of the compatibilizing agent is preferably 5 parts by mass or more, more preferably about 5 - 15 parts by mass, and even more preferably about 5 - 10 parts by mass.

In addition to the above components, compounding agents that are conventionally used in the rubber industry, for example, thermoplastic polyurethane, a stearic acid, an anti-aging agent, oil, wax, a vulcanization agent such as sulfur, a vulcanization accelerator, and the like, can be appropriately blended into the vulcanized rubber composition.

Examples of the vulcanization accelerator include N-tert-butyl-2-benzothiazolylsulfenamide (TBBS), N-cyclohexyl-2-benzothiazolylsulfenamide (CBS), N,N'-dicyclohexyl-2-benzothiazolylsulfenamide (DZ), mercaptobenzothiazole (MBT), dibenzothiazolyl disulfide (MBTS), diphenylguanidine (DPG), and the like. Among these vulcanization accelerators, for a reason of having an excellent vulcanization property and having a large effect in improving mechanical strength in physical properties of a rubber after vulcanization, sulfenamide-based vulcanization accelerators such as TBBS, CBS and DZ and thiazole-based vulcanization accelerators such as MBT and MBTS are preferable.

The vulcanized rubber composition, for example, is preferably degassed by passing through a slit having a maximum width of 2 mm or less provided in a screw of an extruder during extrusion molding of the unvulcanized rubber composition, which contains the above-described butyl-based rubber, natural rubber, carbon black, filler, compatibilizing agent and the like (excluding a vulcanization agent). More specifically, when the components that form the unvulcanized rubber composition are kneaded using a Banbury mixer, extruder or the like, it is preferable that the components are caused to pass through slits (multiple slits may be provided in a screw) each having a maximum width of 2 mm or less provided in a screw of an extruder, and further, degassing is performed from a degassing hole provided immediately after the slits. When degassing is performed in such a specific process in the vulcanized rubber composition that forms the inner liner of the pneumatic tire of the present invention, gas and water contained in the unvulcanized rubber composition are effectively removed, and formation of large voids is further effectively suppressed while the gas permeability of the vulcanized rubber composition is more effectively reduced.

A shape of each slit provided in the screw is not particularly limited. Each slit, for example, is preferably provided as a hole having a circular cross section in the screw. The number of slits is not particularly limited, and may be appropriately set.

A kneading temperature before the unvulcanized rubber composition is degassed (that is, a temperature before the unvulcanized rubber composition passes through the slits) is not particularly limited. However, from a point of view of homogeneously mixing the components, the kneading temperature is preferably about 75 - 95 °C.

Further, in the present invention, from a point of view of suppressing formation of large voids while effectively suppressing the gas permeability of the vulcanized rubber composition, in particular, with respect to the unvulcanized rubber composition after degassing has been performed, it is preferable to add zinc oxide, a vulcanization agent, a vulcanization accelerator and the like at a temperature of about 75 - 95 °C and to perform kneading. That is, in the present invention, it is preferable to use dehydrated zinc oxide as a filler and add the zinc oxide under such a predetermined timing and temperature. As a result, formation of large voids due to vaporization of water contained in the unvulcanized rubber composition at a high temperature during kneading can be effectively suppressed. Further, by suppressing formation of such large voids, the resulting vulcanized rubber composition can have particularly excellent low-gas permeability.

In the vulcanized rubber composition, the above-described heat history during extrusion molding is preferably 100 °C or more, and a discharge temperature is preferably 100 - 130 °C. When such a temperature is reached during discharge, the components are homogeneously dispersed, and the rubber is sufficiently fluidized and thus can be easily molded into any shape. When the temperature of the unvulcanized rubber composition becomes high, there is a problem that water and volatile components contained in the unvulcanized rubber composition evaporate and large voids are likely to form in the vulcanized rubber composition. However, according to the present invention, a dehydrated filler is used and the above-described degassing is performed during extrusion, and further, vulcanization is performed within 24 hours after the unvulcanized rubber is extrusion-molded. Therefore, gases and water contained in the unvulcanized rubber composition are effectively removed. Even when the temperature during extrusion molding reaches or exceeds a volatilization temperature (100 °C) of water, which is a typical volatile component, foaming due to volatilization of water can be suppressed, and along with this, the gas permeability can be reduced. Further, from a point of view of suppressing formation of large voids while effectively reducing the gas permeability of the vulcanized rubber composition, during the above-described extrusion molding, the heating temperature when the unvulcanized rubber composition passes through the slits is preferably 100 °C or more. As a result, water and the like can be efficiently removed by degassing immediately after the unvulcanized rubber composition passes through the slits.

Further, the vulcanized rubber composition is preferably vulcanized within 24 hours after the unvulcanized rubber composition is extrusion-molded. In the present invention, when vulcanization is performed within such a short period of time, an increase in gases and water in the unvulcanized rubber composition to be vulcanized (adsorption of water and the like from an external environment when the unvulcanized rubber composition is left unvulcanized) is effectively suppressed. Therefore, formation of large voids due to vaporization of water or the like at a high temperature during vulcanization is effectively suppressed, and it is possible to suppress the formation of large voids while effectively reducing the gas permeability of the vulcanized rubber composition.

Vulcanization of the unvulcanized rubber composition can be performed using a commonly known method. For example, the vulcanization can be performed by applying heat and pressure, at a temperature of 138 - 191 °C, to the unvulcanized rubber composition in which a vulcanization agent, a vulcanization accelerator and the like are blended. For example, when the vulcanized rubber composition is used for an inner liner part of a tire, the unvulcanized rubber composition is extrusion-molded into a shape of an inner liner, is laminated together with other tire members on a tire molding machine, and a tire using the unvulcanized rubber composition is formed. By applying heat and pressure to the unvulcanized tire in a vulcanizer, a pneumatic tire in which the vulcanized rubber composition is used for the inner liner part can be manufactured.

A number of voids each having a volume of 4.19 $\mu m^3$ or more per 8,000,000 $\mu m^3$ in the vulcanized rubber composition in an environment of 60 °C under an atmospheric pressure is 2 or less. Further, an air permeation coefficient of the vulcanized rubber composition measured using a differential pressure method in an environment of 60 °C is $0.95 \times 10^{-10}$ cm$^3$·cm/(cm$^2$·s·cmHg) or less. Therefore, the gas permeability of the vulcanized rubber composition is effectively reduced. In the present invention, a method for measuring the number of voids in the rubber composition after vulcanization and a method for measuring the air permeation coefficient are respectively as described above. However, more specifically, the number of voids and the air permeation coefficient are respectively values measured using methods described in Examples.

From a point of view of allowing a low gas permeability of the vulcanized rubber composition to be achieved, a thickness of a thinnest portion is preferably 0.2 mm or more. When the thickness of the thinnest portion is 0.2 mm or more, during a storage period until the unvulcanized rubber composition is vulcanized to become the vulcanized rubber composition, absorption of moisture in the air, which causes formation of large voids, can be suppressed, and it is possible to suppress the formation of large voids while effectively reducing the gas permeability of the vulcanized rubber composition.

The pneumatic tire of the present invention includes an inner liner that forms a tire cavity surface, and the vulcanized rubber composition forms the inner liner. The inner liner is a member arranged to hold a tire internal pressure by reducing an amount of air permeation from the tire cavity. The pneumatic tire of the present invention can be suitably used as a passenger car tire, a truck/bus tire, a motorcycle tire, and the like..

(Method for Manufacturing Vulcanized Rubber Composition)

A method for manufacturing the vulcanized rubber composition used for the inner liner of the pneumatic tire of the present invention is not particularly limited. However, the vulcanized rubber composition is suitably manufactured, for example, using the following method for manufacturing the vulcanized rubber composition of the present invention.

That is, the method for manufacturing the vulcanized rubber composition of the present invention includes a kneading process in which an unvulcanized rubber composition is subjected to kneading by extrusion molding, and a vulcanization process in which, after the kneading process, the unvulcanized rubber composition is vulcanized. In the kneading process, the unvulcanized rubber composition is degassed after (preferably immediately after) passing through a slit having a maximum width of 2 mm or less provided in a screw of the extruder. In the vulcanization process, the unvulcanized rubber composition is vulcanized within 24 hours after being extrusion-molded in the kneading process. In the method for manufacturing the vulcanized rubber composition of the present invention, by having such a specific process, it is possible to suppress the formation of large voids while effectively reducing the gas permeability of the vulcanized rubber composition.

In the method for manufacturing the vulcanized rubber composition of the present invention, the types and amounts of the components that form the vulcanized rubber composition are as described above. Further, from the preparation of the unvulcanized rubber composition to the vulcanization process, such as the kneading process in which, during kneading using an extruder, the unvulcanized rubber composition is degassed after passing through a slit having a maximum width of 2 mm or less provided in a screw of the extruder, are also as described above.

[Examples]

In the following, Examples of the present invention are described. However, the present invention is not limited to the following Examples.

Details of materials used in Examples are as follows.

Chlorobutyl rubber: 1066 manufactured by Exxon Chemical Co., Ltd.

Natural rubber: RSS # 3

Carbon black: Obtained by dehydrating GPF (having a nitrogen adsorption specific surface area of 28 $m^2/g$) (manufactured by Mitsubishi Chemical Corporation) by storing the GPF in an oven at 120 °C

Compatibilizing agent: Promix 400 manufactured by Flow Polymers Inc.

Paraffin process oil: PS-32 manufactured by Idemitsu Kosan Co., Ltd.

Anti-aging agent: Nocrac 6C manufactured by Ouchi Shinko Chemical Industry Co., Ltd.

Stearic acid: Bead stearic acid camellia manufactured by NOF Corporation

Zinc dehydroxide: Obtained by drying zinc oxides (two kinds) (manufactured by Mitsui Mining & Smelting Co., Ltd.) in a vacuum drying oven at 30 °C for 24 hours Undehydrated zinc oxide: Zinc oxides (two kinds) manufactured by Mitsui Mining & Smelting Co., Ltd.

Powdered sulfur: manufactured by Tsurumi Chemical Industry Co., Ltd.

Vulcanization accelerator (A): Nocceler M-P manufactured by Ouchi Shinko Chemical Industrial Co., Ltd.

Vulcanization accelerator (B): Nocceler DM-P manufactured by Ouchi Shinko Chemical Industrial Co., Ltd.

<Example 1>

Components at mixing ratios shown in Table 1 were kneaded using a 1.7 L Banbury mixer. As kneading conditions, F.F. was 58%, a rotation speed was 100 rpm, and a temperature was 160 °C. Next, an unvulcanized rubber composition obtained by the kneading was subjected to extrusion molding using an extruder (60φ vent extruder, manufactured by Nakada Engineering Co., Ltd.). A slit having a maximum width of 2 mm was provided in a screw of the extruder, and it was designed such that the unvulcanized rubber composition passes through the slit. Further, immediately after the slit, a degassing hole was provided and the unvulcanized rubber composition was degassed by sucking a gas from the degassing hole. The powdered sulfur and the vulcanization accelerators (A, B) were added to the degassed unvulcanized rubber composition, and the resulting mixture was further kneaded at 95 °C and was discharged from a die so as to have a sheet-like shape having a thickness of 2 mm. After being discharged from the die, the unvulcanized rubber composition was stored for 8 hours at a room temperature in the atmosphere until being subjected to vulcanization.

Next, the obtained sheet-like unvulcanized rubber composition was cut into predetermined dimensions and was vulcanized using the powder sulfur and the vulcanization accelerators (A, B) at 170 °C for 12 minutes to obtain a sheet-like vulcanized rubber composition.

<Example 2>

A sheet-like vulcanized rubber composition was obtained in the same manner as in Example 1 except that the dehydrated zinc oxide was used instead of the undehydrated zinc oxide.

<Comparative Example 1>

A sheet-like vulcanized rubber composition was obtained in the same manner as in Example 1 except that the unvulcanized rubber composition was not degassed and the unvulcanized rubber composition was stored for 30 hours.

<Comparative Example 2>

A sheet-like vulcanized rubber composition was obtained in the same manner as in Comparative Example 1 except that the dehydrated zinc oxide was used instead of the undehydrated zinc oxide.

<Comparative Example 3>

A sheet-like vulcanized rubber composition was obtained in the same manner as in Example 1 except that the unvulcanized rubber composition was stored for 30 hours.

<Comparative Example 4>

A sheet-like vulcanized rubber composition was obtained in the same manner as in Example 1 except that the unvulcanized rubber composition was not degassed.

<Comparative Example 5>

A sheet-like vulcanized rubber composition was obtained in the same manner as in Example 1 except that, instead of the slit having a maximum width of 2 mm, a slit having a maximum width of 5 mm was provided in the screw of the extruder and it was designed such that the unvulcanized rubber composition passes through the slit.

(Evaluation of Gas Permeability)

The gas permeability of each of the vulcanized rubber compositions obtained above was evaluated. In the evaluation of the gas permeability, an air permeation coefficient (cc·cm/cm$^2$·sec·cmHg) was measured according to a method specified in JIS K6275-1 using a gas permeability measurement apparatus "G2700" (manufactured by Yanaco Co., Ltd.) under conditions in which a test gas was air and a test temperature was 60 °C. The results are shown in Table 1.

(Evaluation of Void Volume)

Each of the vulcanized rubber compositions obtained above was cut in a thickness direction, and the resulting cross section was observed using a scanning electron microscopy (in an observation visual field of 1000 times to 3000 times) and the number of voids each having a volume of 4.19 $\mu m^3$ or more per 8,000,000 $\mu m^3$ in the each of the vulcanized rubber compositions was confirmed. The volume of each void is a value obtained based on a maximum length of the void in an image of the cross section observed using the scanning electron microscopy and assuming that the void is a sphere. The results are shown in Table 1. With respect to the vulcanized rubber composition discharged from the extruder in a state in which a temperature during the discharge became constant, the volume of each void was evaluated. A sampling range is at a central portion of the sheet-like vulcanized rubber composition, and 12 places were observed with intervals between the places so to avoid overlapping between observation fields. Further, the central portion of the sheet-like vulcanized rubber composition is a portion where voids are most likely to form. Therefore, in the vulcanized rubber composition, for example, when the number of voids each having a volume of 4.19 $\mu m^3$ or more is 2 or less, at a constant discharge temperature, it can be evaluated that the number of voids is 2 or less also in subsequently obtained sheet-like vulcanized rubber composition.

(Air Leakage Test)

First, in the same way for each of the Examples 1 and 2 and Comparative Examples 1 - 5, a polymer sheet for an inner liner layer was obtained formed from a sheet-like unvulcanized rubber composition having a thickness of 0.05 mm. On the other hand, using a T-die extruder, a chlorobutyl rubber ("Exxon chlorobutyl 1068" manufactured by Exxon Mobil Corporation) as a rubber component and other compounding agents were kneaded, and a rubber composition for a rubber layer was obtained. In this case, a profile was attached to an extrusion port of the T-die extruder so that a thickness of a region corresponding to a tread part (a thickness in a cross section in a tire meridian direction when the tire is filled with air at a specified internal pressure after vulcanization) was 1.0 mm and a thickness of all other regions was 0.5 mm. Next, a raw tire was manufactured by using the polymer sheet as an inner liner layer and positioning the rubber layer on a tire radial direction inner side. Next, in a vulcanization process, the raw tire was press-molded at 170 °C for 20 minutes, and a pneumatic tire having a size of 195/65R15 was manufactured. For structures other than the above-described inner liner layer and rubber layer, materials that are used for manufacturing a tire may be used. Next, the obtained pneumatic tire was mounted to a rim (22.5×7.50) and was stored for 3 months with an initial pressure of 200 kPa at a room temperature of 21 °C in a no-load state. During this period, the internal pressure was measured every 4 days. A regression coefficient ($\alpha$) was calculated based on the following Formula (1) where P0 (kPa) is the initial pressure, Pt (kPa) is the measured pressure, and t (days) is the elapsed time. From the obtained regression coefficient ($\alpha$), air leakage per month ($\beta$) (%/month) was calculated based on the following Formula (2), where t = 30 days. The obtained values of air leakage ($\beta$) (%/month) of Examples 1 and 2 and Comparative Examples 1 - 5 are shown in Table 1 with the value of Comparative Example 2 as 1.00 (reference).

$$Pt/P0 = \exp(-\alpha t) \qquad (1)$$

$$\beta = (1 - \exp(-\alpha t)) \times 100 \qquad (2)$$

[Table 1]

| | | Comparative Example 1 | Comparative Example 2 | Comparative Example 3 | Comparative Example 4 | Comparative Example 5 | Example 1 | Example 2 |
|---|---|---|---|---|---|---|---|---|
| Composition (parts by mass) | Chlorobutyl rubber | 95 | 95 | 95 | 95 | 95 | 95 | 95 |
| | Natural rubber | 5 | 5 | 5 | 5 | 5 | 5 | 5 |
| | Carbon black | 55 | 55 | 55 | 55 | 55 | 55 | 55 |
| | Compatibilizing agent | 5 | 5 | 5 | 5 | 5 | 5 | 5 |
| | Process oil | 2 | 2 | 2 | 2 | 2 | 2 | 2 |
| | Anti-aging agent | 2 | 2 | 2 | 2 | 2 | 2 | 2 |
| | Stearic acid | 1.5 | 1.5 | 1.5 | 1.5 | 1.5 | 1.5 | 1.5 |
| | Undehydrated zinc oxide | 1.5 | | 1.5 | 1.5 | 1.5 | 1.5 | |
| | Zinc dehydroxide | | 1.5 | | | | | 1.5 |
| | Powdered sulfur | 0.5 | 0.5 | 0.5 | 0.5 | 0.5 | 0.5 | 0.5 |
| | Vulcanization accelerator (A) | 0.5 | 0.5 | 0.5 | 0.5 | 0.5 | 0.5 | 0.5 |
| | Vulcanization accelerator (B) | 0.5 | 0.5 | 0.5 | 0.5 | 0.5 | 0.5 | 0.5 |
| Process | Degassed? | No | No | Yes | No | Yes | Yes | Yes |
| | Storage time | 30 hours | 30 hours | 30 hours | 8 hours | 8 hours | 8 hours | 8 hours |
| Evaluation | Slit maximum width | 2 | 2 | 2 | 2 | 5 | 2 | 2 |
| | Number of voids each having a volume of 4.19 μm³ or more per 8,000,000 μm³ | 23 | 20 | 19 | 22 | 17 | 2 | 0 |
| | Air permeation coefficient cm³·cm/(cm²·s·cmHg) | $2.0 \times 10^{-10}$ | $1.7 \times 10^{-10}$ | $1.5 \times 10^{-10}$ | $1.7 \times 10^{-10}$ | $1.3 \times 10^{-10}$ | $9.5 \times 10^{-11}$ | $9.0 \times 10^{-11}$ |
| | Air leakage (%/month) | 1.04 | 1.00 | 1.00 | 1.01 | 0.98 | 0.79 | 0.77 |

Composition units of the components in Table 1 are parts by mass.

**Claims**

1. A pneumatic tire comprising an inner liner formed of a vulcanized rubber composition, wherein
a number of voids each having a volume of $4.19\ \mu m^3$ or more per $8{,}000{,}000\ \mu m^3$ in the vulcanized rubber composition in an environment of 60 °C under an atmospheric pressure is 2 or less, and
an air permeation coefficient of the vulcanized rubber composition measured using a differential pressure method in an environment of 60 °C is $0.95 \times 10^{-10}\ cm^3 \cdot cm/(cm^2 \cdot s \cdot cmHg)$ or less.

2. The pneumatic tire according to claim 1, wherein the vulcanized rubber composition is degassed by passing through a slit having a maximum width of 2 mm or less provided in a screw of an extruder during extrusion molding of an unvulcanized rubber composition before vulcanization.

3. The pneumatic tire according to any one of claims 1 and 2, wherein the vulcanized rubber composition is vulcanized within 24 hours after an unvulcanized rubber composition before vulcanization is extrusion-molded.

4. The pneumatic tire according to claim 3, wherein thermal history during the extrusion molding is 100 °C or higher.

5. The pneumatic tire according to any one of claims 1 - 4, wherein
the vulcanized rubber composition contains a carbon black, and
the carbon black is dehydrated before being blended into the unvulcanized rubber composition before vulcanization.

6. The pneumatic tire according to any one of claims 1 - 5, wherein a thickness of a thinnest portion of the inner liner is 0.2 mm or more.

7. A method for manufacturing the vulcanized rubber composition of any one of claims 1 - 6 comprising:

   a kneading process in which an unvulcanized rubber composition is subjected to kneading by extrusion molding; and
   a vulcanization process in which, after the kneading process, the unvulcanized rubber composition is vulcanized, wherein,
   in the kneading process, the unvulcanized rubber composition is degassed after passing through the slit having a maximum width of 2 mm or less provided in the screw of the extruder, and,
   in the vulcanization process, the unvulcanized rubber composition is vulcanized within 24 hours after being extrusion-molded in the kneading process.

**Patentansprüche**

1. Pneumatischer Reifen, umfassend eine Innenauskleidung, die aus einer vulkanisierten Kautschukzusammensetzung gebildet ist, wobei
eine Anzahl an Hohlräumen, die jeweils ein Volumen von $4{,}19\ \mu m^3$ oder mehr aufweisen pro $8.000.000\ \mu m^3$ in der vulkanisierten Kautschukzusammensetzung in einer Umgebung mit 60°C unter Atmosphärendruck 2 oder weniger beträgt, und
ein Luftpermeationskoeffizient der vulkanisierten Kautschukzusammensetzung, gemessen unter Verwendung eines Differenzialdruckverfahrens in einer Umgebung mit 60°C, $0{,}95 \times 10^{-10}\ cm^3 \cdot cm/(cm^2 \cdot s \cdot cmHg)$ oder weniger beträgt.

2. Pneumatischer Reifen nach Anspruch 1, wobei die vulkanisierte Kautschukzusammensetzung durch Hindurchtreten durch einen Schlitz mit einer maximalen Breite von 2 mm oder weniger, der in einer Schnecke eines Extruders vorgesehen ist, während des Extrusionsformens einer unvulkanisierten Kautschukzusammensetzung vor der Vulkanisierung entgast wird.

3. Pneumatischer Reifen nach einem der Ansprüche 1 und 2, wobei die vulkanisierte Kautschukzusammensetzung innerhalb von 24 Stunden, nachdem eine unvulkanisierte Kautschukzusammensetzung vor der Vulkanisierung extrusionsgeformt wird, vulkanisiert wird.

**EP 3 249 008 B1**

**4.** Pneumatischer Reifen nach Anspruch 3, wobei eine thermische Historie während des Extrusionsformens 100°C oder höher beträgt.

**5.** Pneumatischer Reifen nach einem der Ansprüche 1 - 4, wobei
die vulkanisierte Kautschukzusammensetzung Kohleschwarz enthält, und
das Kohleschwarz vor dem Einmengen in die unvulkanisierte Kautschukzusammensetzung vor der Vulkanisation entwässert wird.

**6.** Pneumatischer Reifen nach einem der Ansprüche 1 - 5, wobei eine Dicke des dünnsten Abschnittes der Innenauskleidung 0,2 mm oder mehr beträgt.

**7.** Verfahren zum Herstellen der vulkanisierten Kautschukzusammensetzung nach einem der Ansprüche 1 - 6, umfassend:

einen Knetprozess, in welchem eine unvulkanisierte Kautschukzusammensetzung einem Kneten durch Extrusionsformen unterzogen wird; und
einen Vulkanisierungsprozess, bei welchem, nach dem Knetprozess, die unvulkanisierte Kautschukzusammensetzung vulkanisiert wird, wobei,
in dem Knetprozess die unvulkanisierte Kautschukzusammensetzung entgast wird, nachdem sie durch den Schlitz mit einer maximalen Breite von 2 mm oder weniger, der in der Schnecke des Extruders vorgesehen ist, hindurchgetreten ist, und
in dem Vulkanisationsprozess die unvulkanisierte Kautschukzusammensetzung innerhalb von 24 Stunden nachdem sie in dem Knetprozess extrusionsgeformt wurde, vulkanisiert wird.

**Revendications**

**1.** Pneumatique comprenant un calandrage intérieur formé d'une composition de caoutchouc vulcanisée, dans lequel le nombre de vides ayant chacun un volume de 4,19 $\mu$m$^3$ ou plus pour 8 000 000 $\mu$m$^3$ dans la composition de caoutchouc vulcanisée dans un environnement à 60°C sous la pression atmosphérique est de 2 ou moins, et le coefficient de perméation de l'air de la composition de caoutchouc vulcanisée mesuré par utilisation d'un procédé de différentiel de pression dans un environnement à 60°C, est de 0,95 $\times$ 10$^{-10}$ cm$^3$·cm/(cm$^2$·s·cmHg) ou moins.

**2.** Pneumatique selon la revendication 1, dans lequel la composition de caoutchouc vulcanisée est dégazée par passage à travers une fente ayant une largeur maximale de 2 mm ou moins disposée dans une vis d'une extrudeuse durant le moulage par extrusion d'une composition de caoutchouc non vulcanisée avant vulcanisation.

**3.** Pneumatique selon l'une quelconque des revendications 1 et 2, dans lequel la composition de caoutchouc vulcanisée est vulcanisée dans les 24 heures après qu'une composition de caoutchouc non vulcanisée avant vulcanisation a été moulée par extrusion.

**4.** Pneumatique selon la revendication 3, dans lequel l'historique thermique durant le moulage par extrusion est de 100°C ou plus.

**5.** Pneumatique selon l'une quelconque des revendications 1 à 4, dans lequel la composition de caoutchouc vulcanisée contient un noir de carbone, et le noir de carbone est déshydraté avant d'être mélangé dans la composition de caoutchouc non vulcanisée avant vulcanisation.

**6.** Pneumatique selon l'une quelconque des revendications 1 à 5, dans lequel l'épaisseur de la partie la plus mince du calandrage intérieur est de 0,2 mm ou plus.

**7.** Procédé pour fabriquer la composition de caoutchouc vulcanisée de l'une quelconque des revendications 1 à 6, comprenant :

une étape de malaxage dans laquelle une composition de caoutchouc non vulcanisée est soumise à un malaxage par moulage par extrusion ; et
une étape de vulcanisation dans laquelle, après l'étape de malaxage, la composition de caoutchouc non vulcanisée est vulcanisée,

dans lequel,
dans l'étape de malaxage, la composition de caoutchouc non vulcanisée est dégazée après passage à travers la fente ayant une largeur maximale de 2 mm ou moins disposée dans la vis de l'extrudeuse, et, dans l'étape de vulcanisation, la composition de caoutchouc non vulcanisée est vulcanisée dans les 24 heures après qu'elle a été moulée par extrusion dans l'étape de malaxage.

**EP 3 249 008 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014227494 A